**Europäisches Patentamt**

**European Patent Office**

**Office européen des brevets**

(11) Numéro de publication: **0 127 506**

**A1**

(12) # DEMANDE DE BREVET EUROPEEN

(21) Numéro de dépôt: **84400871.4**

(22) Date de dépôt: **27.04.84**

(51) Int. Cl.³: **F 16 H 27/06**
**E 05 F 15/16**

(30) Priorité: **03.05.83 FR 8307367**

(43) Date de publication de la demande:
**05.12.84 Bulletin 84/49**

(84) Etats contractants désignés:
**AT BE CH DE GB IT LI LU NL SE**

(71) Demandeur: **LA MECANIQUE ELECTRIQUE**
**45 Avenue Caffin**
**F-94210 la Varenne(FR)**

(72) Inventeur: **Charbonnel, Louis**
**4 bis rue des Sorbiers**
**F-94210 La Varenne(FR)**

(74) Mandataire: **Durand, Yves Armand Louis et al,**
**Cabinet Z. Weinstein 20, Avenue de Friedland**
**F-75008 Paris(FR)**

(54) **Dispositif de commande d'un élément formant par exemple porte basculante.**

(57) Le dispositif de commande en rotation d'un élément quelconque comprend essentiellement un arbre mené (1) avec glissières (2, 3, 4) radialement solidaires de cet arbre, et un arbre menant (6) antraîné par un groupe moto-réducteur (M) et comportant autant de branches (7, 8, 9), porte-galets (7a, 8a, 9a), qu'il y a de glissières sur l'arbre mené (1) auquel est relié l'élément à commander.

Le dispositif de l'invention permet par exemple la commande d'ouverture et de fermeture d'une porte (14) avec verrouillage mécanique à l'ouverture et à la fermeture de la porte.

FIG. 1

EP 0 127 506 A1

Croydon Printing Company Ltd.

-1-

<u>Dispositif de commande d'un élément formant par exemple porte basculante</u>

La présente invention se rapporte d'une manière générale à la commande en rotation d'un élément quelconque et concerne plus particulièrement un dispositif d'entraînement et de commande d'une porte basculante.

On a déjà proposé sur le marché divers mécanismes pour commander l'ouverture et la fermeture des portes, notamment celles qui sont destinées à équiper les hangars ou les garages.

Toutefois, les mécanismes proposés jusqu'à maintenant étaient relativement coûteux et compliqués, et exigeaient à la longue des réparations ou même un remplacement.

Aussi, la présente invention a pour but de proposer un nouveau mécanisme de commande pour un élément quelconque, tel que par exemple une porte basculante, qui présente toutes les qualités voulues de simplicité, de fiabilité, et de faible coût, tout en procurant des possibilités de verrouillage variables, et à la position voulue, de l'élément ou porte à commander.

A cet effet, l'invention a pour objet un dispositif de commande d'un élément quelconque et du type comprenant un arbre mené qui porte un organe d'entraînement présentant plusieurs glissières ou coulisses de guidage d'un galet radialement solidaire d'un arbre menant, caractérisé en ce que ledit arbre menant comporte autant de branches porte-galets qu'il y a de glissières ou coulisses radialement solidaires de l'arbre mené auquel est relié l'élément à commander.

Suivant une autre caractéristique de l'invention, l'arbre menant comporte au moins trois branches dont les extrémités respectives portent un galet coopérant avec autant de glissières radialement solidaires de l'élément mené.

On précisera encore ici que les glissières présentent chacune de préférence une section transversale en U dont les branches comportent des extrémités tournées vers l'intérieur du U.

Suivant une application particulière, l'élément relié à l'arbre mené est constitué par une porte.

Selon un mode de réalisation particulier conforme à l'invention, l'arbre menant et l'arbre mené comportent respectivement un ensemble de trois branches et un ensemble de trois glissières, chaque ensemble formant un T tandis que l'arbre menant ou mené est situé à l'intersection des branches verticale et horizontale du T.

Selon encore une autre caractéristique de l'invention, la porte précitée est verticalement solidaire d'un bras lui-même relié à l'arbre mené suivant un angle de sensiblement 45° par rapport à la branche horizontale du T formé par les glissières.

On ajoutera encore ici que l'arbre menant est de préférence constitué par l'arbre de sortie d'un groupe moto-réducteur.

L'invention vise également une porte basculante reliée à et commandée par un dispositif répondant à l'une quelconque des caractéristiques susmentionnées.

Mais d'autres avantages et caractéristiques de l'invention apparaîtront mieux dans la description détaillée qui suit et se réfère aux dessins annexés, donnés uniquement à titre d'exemple, et dans lesquels:

La figure 1 illustre schématiquement en élévation et coupe partielle un dispositif de commande conforme à l'invention et permettant la manoeuvre d'une porte qui, sur la figure, est montrée en position fermée.

La figure 2 est une vue identique à la figure 1 mais montrant la porte en position à demi-ouverte.

La figure 3 est encore une vue identique aux figures précédentes, mais montrant la porte en position de pleine ouverture.

La figure 4 est une vue en bout d'une glissière, suivant la flèche IV de la figure 3.

La figure 5 illustre très schématiquement en élévation un autre mode de réalisation du dispositif de l'invention.

En se reportant aux dessins annexés, on voit qu'un dispositif conforme au principe de l'invention comprend essentiellement un arbre mené 1 solidaire d'une pluralité de glissières ou coulisses 2, 3, 4, 5, et un arbre menant 6 comportant autant de branches 7, 8, 9 et 10 qu'il y a de glissières.

Les branches 7, 8, 9 et 10 radialement solidaires de l'arbre menant 6 comportent à leurs extrémités libres et respectives un galet ou analogue 7a, 8a, 9a, 10a susceptible de coopérer avec les glissières 2, 3, 4, 5 radialement solidaires de l'élément mené 1.

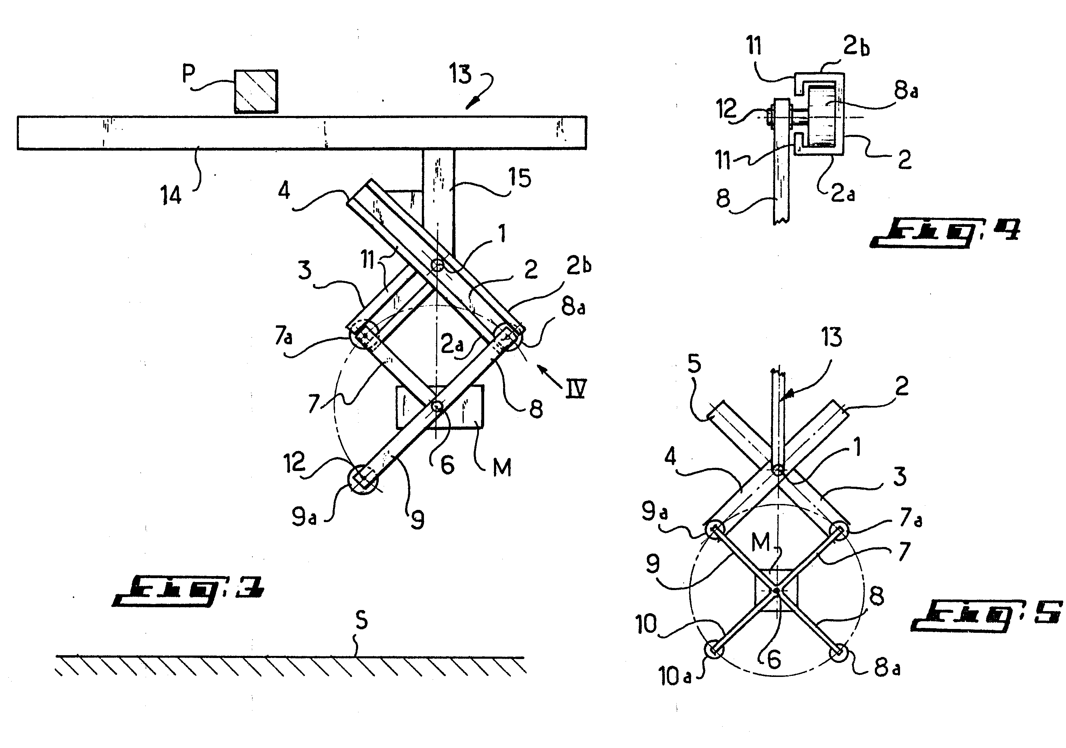

Comme on le voit mieux sur la figure 4, chaque glissière, telle que la glissière 2 visible sur ladite figure, présente de préférence une section transversale en U dont les branches 2a, 2b comportent des extrémités 11 repliées ou tournées vers l'intérieur du U de façon à former en quelque sorte une cage de roulement pour les galets, tels que le galet 8a visible sur la figure 4. Bien entendu, chaque galet, tel que 8a, est relié à une branche, telle que 8, solidaire de l'arbre menant 6 par l'intermédiaire d'un petit axe repéré en 12 sur la figure 4.

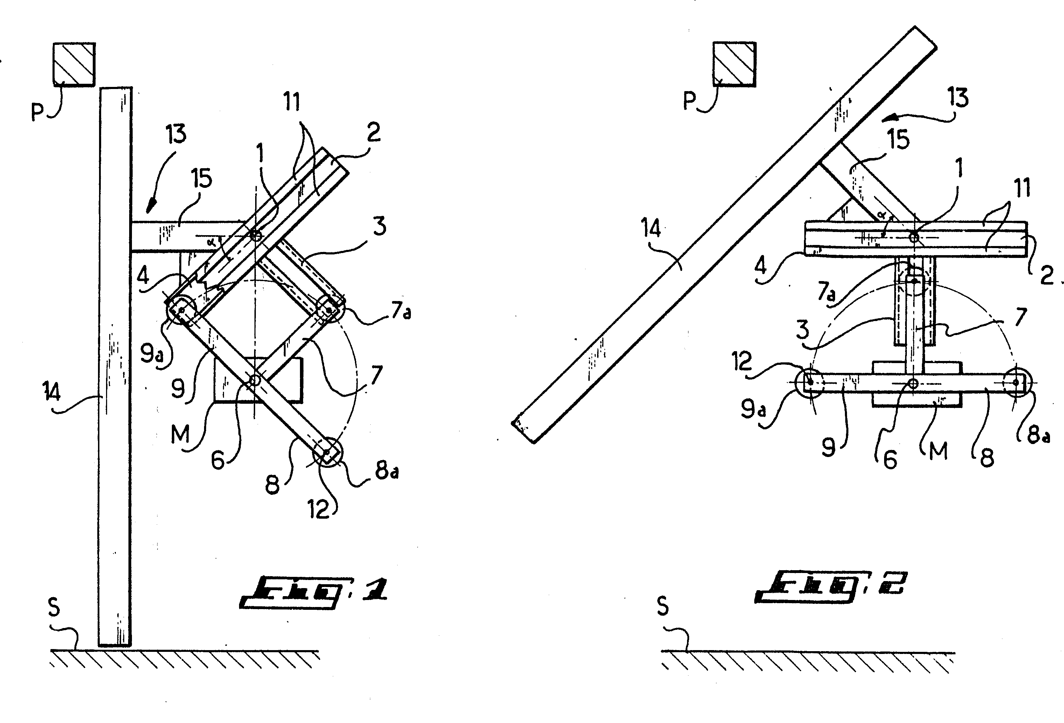

Suivant le mode de réalisation représenté sur les figures 1 à 3, l'arbre mené 1 est solidaire de trois glissières qui forment un T, de sorte que la glissière 3 forme la branche verticale de ce T, tandis que les glissières 2 et 4 en forment la branche horizontale. L'arbre mené 1 est situé à l'intersection des branches horizontale et verticale susmentionnées.

De la même façon, l'arbre menant 6 comporte trois branches 7, 8, 9 portant chacune un galet 7a, 8a, 9a et formant ensemble un T dont la branche verticale est constituée par la branche 7 et dont la branche horizontale est constituée par les branches 8 et 9.
L'arbre menant 6 est situé à l'intersection des
branches horizontale et verticale du T défini
ci-avant.

Un élément quelconque 13 est relié à l'arbre mené 1
dont la rotation est commandée, comme on le verra
en détail plus loin à propos du fonctionnement, par
l'arbre menant 6 qui est par exemple constitué par
l'arbre de sortie d'un groupe moto-réducteur montré
schématiquement en M.

Suivant l'exemple de réalisation représenté sur les
figures 1 à 3, l'élément 13 est constitué par une
porte 14 susceptible d'obturer une embrasure s'étendant entre le sol S et un élément de bâtiment
quelconque, tel que par exemple une poutre P. La
porte 14 est verticalement solidaire d'un bras ou
analogue 15 relié à l'arbre mené 1 suivant un angle $\alpha$
de sensiblement 45° par rapport à la branche horizontale du T solidaire de l'arbre mené 1, c'est-à-dire
par rapport aux glissières 2 et 4.

On expliquera dans ce qui suit le fonctionnement du
dispositif représenté sur les figures 1 à 3.

Lorsque la porte 14 est en position fermée, comme on
le voit sur la figure 1, les galets 7a et 9a sont
engagés respectivement dans les glissières 3 et 4
interdisant ainsi toute rotation de l'arbre mené 1,
c'est-à-dire finalement l'ouverture de la porte 14
si l'on agissait directement sur celle-ci. Autrement
dit, dans un tel cas, l'arbre mené 1 supportera les
efforts qui ne seront ainsi pas subis par les engrenages du moto-réducteur M, puisqu'un blocage en rotation est réalisé par les galets 7a, 9a dans leurs glissières respectives 3, 4. On évite par conséquent la détérioration des engrenages du groupe moto-réducteur M.

La porte 14 s'ouvrira en faisant tourner l'arbre menant 6 dans le sens inverse de celui des aiguilles d'une montre. Ainsi, le galet 9a se dégagera de la glissière 4, tandis que le galet 7a, en roulant dans la glissière 3, provoquera la rotation de l'arbre mené 1, c'est-à-dire de la porte 14.

C'est ce que l'on voit sur la figure 2 où la porte 14 est à demi-ouverte, ce qui correspond sensiblement à une rotation d'un quart de tour des galets 7a, 8a, 9a.

Ces galets, si la rotation de l'arbre menant M est poursuivie, se déplaceront d'un nouveau quart de tour pour réaliser finalement la pleine ouverture de la porte 14, comme on le voit bien sur la figure 3. Dans cette position, on voit que le galet 8a s'est introduit dans la glissière 2, tandis que le galet 7a reste engagé dans la glissière 3 à l'extrémité de celle-ci. Dès lors, comme on l'a déjà expliqué à propos de la position de fermeture de la porte 14, on interdit toute rotation de l'arbre mené 1. En d'autres termes, si l'on veut faire basculer la porte en agissant directement sur celle-ci, les glissières 2 et 3 bloquées en rotation par les galets 8a et 7a encaisseront tous les efforts, qui ainsi ne risqueront pas de détériorer les engrenages du groupe moto-réducteur M.

On comprend donc, que grâce au mécanisme selon l'invention, seules deux branches porte-galets de l'arbre menant 6 sont susceptibles de coopérer à la fois avec deux glissières de l'arbre mené.

Cela est également valable pour le mode de réalisation représenté sur la figure 5 dont on ne décrira pas en détail le fonctionnement, puisqu'il est sensiblement le même que celui de la réalisation des figures 1 à 3. On dira seulement ici que l'arbre mené 1 comporte un ensemble cruciforme de quatre glissières, tandis que l'arbre menant 6 comporte un ensemble cruciforme de quatre branches porte-galets. On peut ainsi, à chaque quart de tour de l'ensemble menant avec galets réaliser un verrouillage mécanique de l'élément à commander 13 qui peut être quelconque et est relié à l'arbre mené 1. Ainsi, comme on l'a déjà expliqué, tout effort en rotation sur l'axe 6 est avantageusement éliminé.

On a donc réalisé suivant l'invention un mécanisme permettant l'entraînement en rotation d'un élément quelconque, tel que par exemple une porte, avec verrouillage mécanique possible tous les quarts de tour de l'arbre mené afin d'éviter à l'arbre menant de subir des efforts qui risqueraient de détériorer le moyen d'entraînement de cet arbre.

Bien entendu, l'invention n'est nullement limitée aux modes de réalisation décrits et illustrés qui n'ont été donnés qu'à titre d'exemple. C'est ainsi que le dispositif de l'invention pourrait comporter plus de quatre branches porte-galets et glissières coopérantes. De même, l'élément relié à l'arbre mené peut être quelconque, ainsi que la forme des branches porte-galets qui peuvent par exemple être plus ou moins renforcées. C'est dire que l'invention comprend tous les équivalents techniques des moyens décrits ainsi que leurs combinaisons si celles-ci sont effectuées suivant son esprit.

Revendications

1. Dispositif de commande d'un élément quelconque et du type comprenant un arbre mené qui porte un organe d'entraînement présentant plusieurs glissières ou coulisses de guidage d'un galet radialement solidaire d'un arbre menant, caractérisé en ce que ledit arbre menant comporte autant de branches porte-galets qu'il y a de glissières ou coulisses radialement solidaires de l'arbre mené auquel est relié l'élément à  commander.

2. Dispositif selon la revendication 1, caractérisé en ce que l'arbre menant comporte au moins trois branches dont les extrémités respectives portent un galet coopérant avec autant de glissières de l'arbre mené.

3. Dispositif selon la revendication 1 ou 2, caractérisé en ce que seules deux branches porte-galets de l'arbre menant sont susceptibles de coopérer à la fois avec deux glissières de l'arbre mené.

4. Dispositif selon l'une des revendications 1 à 3, caractérisé en ce que les glissières précitées présentent chacune une section transversale en U dont les branches comportent des extrémités tournées vers l'intérieur du U.

5. Dispositif selon l'une des revendications précédentes, caractérisé en ce que l'élément à commander et relié à l'arbre mené est constitué par une porte.

6. Dispositif selon l'une des revendications précédentes, caractérisé en ce que l'arbre menant et l'arbre mené comportent respectivement un ensemble de trois branches et un ensemble de trois glissières, chaque ensemble formant un T, l'arbre menant ou mené étant situé à l'intersection des branches horizontale et verticale du T.

7. Dispositif selon l'une des revendications précédentes, caractérisé en ce que la porte précitée est verticalement solidaire d'un bras lui-même relié à l'arbre mené suivant un angle de sensiblement 45° par rapport à la branche horizontale du T formé par les glissières.

8. Dispositif selon l'une des revendications précédentes, caractérisé en ce que l'arbre menant est constitué par l'arbre de sortie d'un groupe moto-réducteur.

9. Porte basculante commandée par un dispositif selon l'une quelconque des revendications précédentes.

P

11

2

13

15

1

3

4

7a

9a

7

9

M

6

8

8a

12

14

S

Fig. 1

P

13

15

14

1

11

4

2

7a

3

7

12

9a

9

6

M

8

8a

S

Fig. 2

1/2

0127506

P

13

14

4

3

11

1

2

2b

7a

2a

8a

7

8

IV

12

6

M

9a

9

15

**Fig. 3**

S

11

2b

12

8a

11

2

8

2a

**Fig. 4**

5

13

4

2

9a

1

3

7a

9

M

7

10

8

10a

6

8a

**Fig. 5**

Office européen
des brevets

**RAPPORT DE RECHERCHE EUROPEENNE**

**0127506**

Numéro de la demande

EP  84 40 0871

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-B-1 240 355  (ZUSE KG) <br> * Colonne 6, lignes 3-9 * | 1 | F 16 H   27/06 <br> E 05 F   15/16 |
| | --- | | |
| A | GB-A-1 212 814  (SERAGNOLI) <br> * Figures 7,8 * | 1 | |
| | ----- | | |

DOMAINES TECHNIQUES RECHERCHES (Int. Cl. ³)

F 16 H
E 05 F

Le present rapport de recherche a été établi pour toutes les revendications

| Lieu de la recherche <br> LA HAYE | Date d'achèvement de la recherche <br> 26-07-1984 | Examinateur <br> MENDE H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

OEB Form 1503. 03 82